# EUROPÄISCHE PATENTSCHRIFT

(11) **EP 4 334 088 B1**
(45) Veröffentlichungstag und Bekanntmachung des Hinweises auf die Patenterteilung: **28.01.2026**
(21) Anmeldenummer: 22717092.5
(22) Anmeldetag: 21.03.2022
(51) Int. Cl.: B25J 9/16, B23Q 15/18, B21J 15/02, B21J 15/28, B21J 15/30

(54) **VERFAHREN ZUM POSITIONIEREN EINES STANZNIET-SETZWERKZEUGS MITTELS EINES ROBOTERS**
METHOD FOR POSITIONING A SELF-PIERCING-RIVET SETTING TOOL BY MEANS OF A ROBOT
PROCÉDÉ DE POSITIONNEMENT D'UN OUTIL DE MISE EN PLACE DE RIVET AUTO-PERCEUR AU MOYEN D'UN ROBOT

(30) Priorität: 06.05.2021 DE 102021204579
(43) Veröffentlichungstag der Anmeldung: 13.03.2024
(73) Patentinhaber: KUKA Deutschland GmbH, 86165 Augsburg (DE)
(72) Erfinder: STIMMEL, Burkhard, 82547 Achmühle (DE)
(74) Vertreter: Schlotter, Alexander Carolus Paul
(86) Internationale Anmeldenummer: PCT/EP2022/057270
(87) Internationale Veröffentlichungsnummer: WO 2022/233493

(56) Entgegenhaltungen:
- DE-A1- 102008 039 872
- JP-A- 2004 306 115

## Beschreibung

Die vorliegende Erfindung betrifft ein Verfahren und System zum Positionieren eines Stanzniet-Setzwerkzeugs mittels eines Roboters sowie ein Computerprogramm bzw. Computerprogrammprodukt zur Durchführung des Verfahrens.

Die DE 10 2008 039 872 A1 befasst sich mit einer Einrichtung sowie einem Verfahren zu deren Betrieb und mit einem Werkzeughalter, welcher von der Einrichtung betrieben wird, wobei die Einrichtung derart ausgebildet ist, dass eine zumindest teilweise elastische Verformung des Werkzeughalters, insbesondere die Aufbiegung des Werkzeughalters , nach Maßgabe eines ersten Verformungsbeschreibungsmittels ermittelbar ist, wobei das Verformungsbeschreibungsmittel die Verformungseigenschaften des Werkzeughalters unter Berücksichtigung der Betriebskraft zumindest teilweise beschreibt.

Aufgabe der vorliegenden Erfindung ist es, das robotergestützte Stanznieten zu verbessern.

Diese Aufgabe wird durch ein Verfahren mit den Merkmalen des Anspruchs 1 gelöst. Ansprüche 8, 9 stellen ein System bzw. Computerprogramm bzw. Computerprogrammprodukt zur Durchführung eines hier beschriebenen Verfahrens unter Schutz. Die Unteransprüche betreffen vorteilhafte Weiterbildungen.

Nach einer Ausführung der vorliegenden Erfindung weist ein Verfahren zum robotergestützten Stanznieten die Schritte auf:
- Kommandieren eines Roboters zum Positionieren eines Stanzniet-Setzwerkzeugs in eine Nietpose an wenigstens zwei miteinander zu fügenden Werkstücken; und
- Kommandieren des Stanzniet-Setzwerkzeugs zum Setzen eines (Stanz)Niet zum Fügen der wenigstens zwei Werkstücke mittels Stanznieten;
wobei während dieses Stanznietens der Roboter zum Verändern der Pose des Stanzniet-Setzwerkzeugs, insbesondere ausgehend von bzw. gegenüber der Nietpose, derart bzw. mit der Maßgabe kommandiert wird, dass durch dieses Verändern eine stanznietbedingte elastische Deformation des Stanzniet-Setzwerkzeugs, insbesondere wenigstens eines matrizenseitigen Schenkels des Stanzniet-Setzwerkzeugs, wenigstens teilweise kompensiert, insbesondere wenigstens teilweise korrigiert, wird.

Beim Stanznieten müssen häufig hohe Prozesskräfte aufgebracht werden, oft im Bereich von, zum Teil deutlich, über 20 kN. Dadurch kann es selbst bei massiv ausgebildeten Stanzniet-Setzwerkzeugen zu elastische Deformationen kommen, die das Ergebnis des Stanznietens beeinträchtigen.

Auf der anderen Seite sollen solche Stanzniet-Setzwerkzeuge oft möglichst leicht ausgebildet sein, um die Traglast des Roboters zu reduzieren, und/oder Schenkel, die Nietstempel und Matrize tragen, lang ausgebildet sein, um die Nieten weit von einem Bauteilrand setzen zu können.

Durch ein entsprechendes Verändern der Pose des Stanzniet-Setzwerkzeugs während des Stanznietens mittels des Roboters können in einer Ausführung Setzwerkzeuge verwendet werden, die leicht(er) sind und/oder längere Schenkel aufweisen. Zusätzlich oder alternativ kann in einer Ausführung das Ergebnis des Stanznietens verbessert werden.

Somit wird in einer Ausführung mithilfe des Roboters während des Stanznietes eine Ausgleichsbewegung des Stanzniet-Setzwerkzeugs kommandiert bzw. durchgeführt und dadurch eine stanznietbedingte elastische Deformation des Stanzniet-Setzwerkzeugs, insbesondere wenigstens eines matrizenseitigen Schenkels des Stanzniet-Setzwerkzeugs, wenigstens teilweise kompensiert bzw. korrigiert bzw. ist, insbesondere wird, diese Ausgleichsbewegung derart vorgegeben, in einer Ausführung programmiert.

Ein Verändern der Pose des Stanzniet-Setzwerkzeugs zur wenigstens teilweisen Kompensierung einer stanznietbedingten elastischen Deformation des Stanzniet-Setzwerkzeugs umfasst in einer Ausführung eine Verschiebung und/oder Verdrehung des Stanzniet-Setzwerkzeugs derart, dass diese Verschiebung und/oder Verdrehung des Stanzniet-Setzwerkzeugs eine Aufbiegung des, in einer Ausführung C-artigen, Stanzniet-Setzwerkzeugs und/oder eine Verschiebung und/oder Verdrehung einer Matrize und/oder Achse des Stanzniet-Setzwerkzeugs infolge einer stanznietbedingten elastischen Deformation des Stanzniet-Setzwerkzeugs, insbesondere wenigstens eines matrizenseitigen Schenkels des Stanzniet-Setzwerkzeugs, ganz oder teilweise kompensiert, in einer Ausführung dieser stanznietbedingten Aufbiegung des Stanzniet-Setzwerkzeugs bzw. Verschiebung und/oder Verdrehung der Matrize und/oder Achse gleich- oder entgegengerichtet ist. In einer Ausführung entspricht ein Betrag einer Verschiebung der Matrize des Stanzniet-Setzwerkzeugs infolge des Veränderns der Pose des Stanzniet-Setzwerkzeugs zur wenigstens teilweisen Kompensierung wenigstens 25% und/oder höchstens 200% eines Betrags einer (nicht kompensierten) Verschiebung der Matrize infolge einer stanznietbedingten elastischen Deformation des Stanzniet-Setzwerkzeugs, insbesondere des matrizenseitigen Schenkels, und/oder ein Betrag einer Verdrehung der Matrize des Stanzniet-Setzwerkzeugs infolge des Veränderns der Pose des Stanzniet-Setzwerkzeugs zur wenigstens teilweisen Kompensierung wenigstens 25% und/oder höchstens 200% eines Betrags einer (nicht kompensierten) Verdrehung der Matrize infolge einer stanznietbedingten elastischen Deformation des Stanzniet-Setzwerkzeugs, insbesondere des matrizenseitigen Schenkels, bzw. ist bzw. wird das Verändern der Pose derart bzw. mit dieser Maßgabe kommandiert, insbesondere vorgegeben. Gleiches gilt in einer Ausführung analog für eine wenigstens teilweise Kompensierung einer elastischen Rückformung des Stanzniet-Setzwerkzeugs infolge eines Abbaus einer durch das Stanzniet-Setzwerkzeug aufgebrachten Kraft. In einer Ausführung wird das Verändern der Pose des Stanzniet-Setzwerkzeugs zur wenigstens teilweisen Kompensierung derart bzw. mit der Maßgabe kommandiert, dass eine Position und/oder Orientierung der Matrize des Stanzniet-Setzwerkzeugs während des Stanznietens weniger von der Pose der Matrize bzw. Achse in der Nietpose abweicht als ohne Kompensierung bzw. Veränderung der Pose des Stanzniet-Setzwerkzeugs.

In einer Ausführung wird der Roboter während des Stanznietens auf Basis eines, in einer Ausführung in einer Robotersteuerung, abgespeicherten, insbesondere mathematischen bzw. numerischen, Deformationsmodells des Stanzniet-Setzwerkzeugs kommandiert.

Das Deformationsmodell umfasst in einer Ausführung eine direkte oder indirekte Zuordnung zwischen Prozesswerten des Stanznietens, insbesondere Kräften, insbesondere Kraftverläufen, Stellwegen, insbesondere Stellwegverläufen, oder dergleichen, und Posen(änderungen) des Setzwerkzeugs zur wenigstens teilweisen Kompensation, beispielsweise in tabellarischer oder funktionaler Form oder dergleichen.

Durch eine solche (deformations)modellgestütze Kommandierung der Posenänderung des Stanzniet-Setzwerkzeugs während des Stanznietens kann eine stanznietbedingte elastische Deformation des Stanzniet-Setzwerkzeugs in einer Ausführung besonders vorteilhaft, insbesondere präzise(r) und/oder prozesssicher(er), wenigstens teilweise kompensiert und dadurch in einer Ausführung das Ergebnis des Stanznietens (weiter) verbessert werden.

In einer Ausführung ist, insbesondere wird, das Deformationsmodell auf Basis des Stanzniet-Setzwerkzeugtyps oder des individuellen Stanzniet-Setzwerkzeugs kalibriert, vorzugsweise in nachfolgend erläuterter Weise.

Dabei kann durch ein individuelles bzw. Stanzniet-Setzwerkzeugspezifisch( kalibriert)es Deformationsmodell in einer Ausführung die Präzision der Kompensation (weiter) verbessert werden, durch ein typweise( kalibrierte)s Deformationsmodell in einer Ausführung der Kalibrierungsaufwand reduziert werden.

Zusätzlich oder alternativ ist, insbesondere wird, das Deformationsmodell in einer Ausführung, vorzugsweise nach dem Kalibrieren, auf Basis des durchzuführenden Stanznietens und/oder auf Basis der zu fügenden Werkstücke parametriert.

Durch ein applikationsspezifisch( parametriert)es Deformationsmodell kann in einer Ausführung die Präzision der Kompensation (weiter) verbessert und/oder der Kalibrierungsaufwand reduziert werden.

Eine Ausführung eines solchen, in einer Ausführung wenigstens zweistufigen, Verfahrens mit Kalibrierung und anschließender Parametrierung lässt sich am vereinfachten Beispiel eines Deformationsmodells veranschaulichen, das die Matrize bzw. den matrizenseitigen Schenkel des Setzwerkzeugs als einfache Feder modelliert. Dabei kann zunächst die Federsteifigkeit c = F/s mit der Nietdruckkraft F und dem Ausweichweg s der Matrize ermittelt und das Deformationsmodell solcherart kalibriert werden. Dann kann in einem zweiten Schritt für ein werkstückspezifisches Stanznieten ein Kraftverlauf F = F(t) über dem Stellweg oder der Zeit t vorgegeben bzw. ermittelt werden. Mit diesem kann dann eine entsprechende Posenänderung des Stanzniet-Setzwerkzeugs, beispielhaft Δ(t) = δ·F(t)/c mit einem Korrekturfaktor δ ≠ 0 oder dergleichen, bestimmt bzw. das Deformationsmodell solcherart parametriert werden.

In einer Ausführung wird der Roboter nach dem Stanznieten zum weiteren Verändern der Pose des Stanzniet-Setzwerkzeugs, vorzugsweise auf Basis des abgespeicherten Deformationsmodells und/oder gegensinnig zum Verändern während des Stanznietens, derart bzw. mit der Maßgabe kommandiert, das durch dieses weitere Verändern eine elastische Rückformung des Stanzniet-Setzwerkzeugs, vorzugsweise wenigstens eines matrizenseitigen Schenkels des Stanzniet-Setzwerkzeugs, die durch einen Abbau einer durch das Stanzniet-Setzwerkzeug (beim bzw. zum Stanznieten) aufgebrachten Kraft wenigstens teilweise kompensiert, insbesondere wenigstens teilweise korrigiert, wird.

Dadurch können in einer Ausführung das Stanzniet-Setzwerkzeug und/oder die gefügten Werkstücke geschont werden.

In einer Ausführung umfasst das Verändern der Pose des Stanzniet-Setzwerkzeugs während des Stanznietens und/oder das Verändern der Pose des Stanzniet-Setzwerkzeugs nach Fügen der wenigstens zwei Werkstücke wenigstens eine (translatorische) Verschiebung, vorzugsweise wenigstens eine Verschiebung in oder entgegen einer Achsrichtung, insbesondere Hauptachsrichtung, eines TCPs ("Tool Center Point") bzw. Endeffektorkoordinatensystems zum Steuern, insbesondere Programmieren, des Roboters und/oder in oder entgegen einer Schließ-, insbesondere Schließkraftrichtung des Stanzniet-Setzwerkzeugs und/oder quer zur Schließ(kraft)richtung, insbesondere in einer Längsrichtung eines, insbesondere matrizenseitigen, Schenkels des Stanzniet-Setzwerkzeugs . Dabei kann insbesondere eine Verschiebung in Schließ(kraft)richtung während des Stanznietens und eine Verschiebung entgegen der Schließ(kraft)richtung nach dem Fügen oder umgekehrt eine Verschiebung entgegen der Schließ(kraft)richtung während des Stanznietens und eine Verschiebung in Schließ(kraft)richtung nach dem Fügen kommandiert werden.

Zusätzlich oder alternativ umfasst das Verändern der Pose des Stanzniet-Setzwerkzeugs während des Stanznietens und/oder nach Fügen der wenigstens zwei Werkstücke in einer Ausführung wenigstens eine (rotatorische) Verdrehung, vorzugsweise wenigstens eine Verdrehung um eine Achse, insbesondere Hauptachse, eines bzw. des TCPs ("Tool Center Point") bzw. Endeffektorkoordinatensystems zum Steuern, insbesondere Programmieren, des Roboters und/oder quer zur Schließ-, insbesondere Schließkraftrichtung des Stanzniet-Setzwerkzeugs und/oder quer zu einer Längsrichtung eines, insbesondere matrizenseitigen, Schenkels des Stanzniet-Setzwerkzeugs.

Durch Verschiebungen und Verdrehungen in bzw. entgegen bzw. um TCP-Achs(richtung)en kann in einer Ausführung das Kommandieren vereinfacht und/oder die Präzision verbessert werden. Durch das Verschieben in bzw. entgegen Schließ(kraft)richtung und Verdrehung um eine hierzu und zur Schenkellängsrichtung quere Achse können in einer Ausführung wesentliche Teile der Deformation kompensiert und dadurch die Präzision (weiter) verbessert werden. Durch Verschiebungen kann in einer Ausführung eine Deformation einfach kompensiert und dadurch die Präzision (weiter) verbessert werden, durch Verdrehungen in einer Ausführung Biegedeformationen besonders gut kompensiert und dadurch das Ergebnis des Stanznietes (weiter) verbessert werden.

In einer Ausführung umfasst ein hier beschriebenes Verfahren die weiteren Schritte:
- Kommandieren des Roboters zum Positionieren des Stanzniet-Setzwerkzeugs in eine weitere Nietpose; und
- Kommandieren des Stanzniet-Setzwerkzeugs zum Setzen eines weiteren Niet zum Fügen der wenigstens zwei Werkstücke oder von wenigstens zwei weiteren Werkstücke mittels weiterem Stanznieten;
wobei auch während dieses weiteren Stanznietens der Roboter auf Basis des abgespeicherten Deformationsmodells des Stanzniet-Setzwerkzeugs zum Verändern der Pose des Stanzniet-Setzwerkzeugs, insbesondere ausgehend von bzw. gegenüber der weiteren Nietpose, zur wenigstens teilweisen Kompensierung einer durch das weitere Stanznieten bedingten elastischen Deformation des Stanzniet-Setzwerkzeugs kommandiert wird, wobei das Deformationsmodell auf Basis dieses weiteren durchzuführenden Stanznietens und/oder der dabei zu fügenden Werkstücke umparametriert ist.

Dadurch kann in einer Ausführung die Präzision verbessert und so das Ergebnis der beiden Stanznietungen verbessert werden. Eine Ausführung eines solchen wenigstens zwei-, insbesondere wenigstens dreistufigen Verfahrens mit Parametrierung des Deformationsmodells für das eine Stanznieten und anschließender Umparametrierung des Deformationsmodells für das weitere Stanznieten sowie gegebenenfalls anfänglicher Kalibrierung lässt sich am oben erläuterten vereinfachten Beispiel veranschaulichen, indem in einem dritten Schritt für ein weiteres Stanznieten ein anderer Kraftverlauf F = F'(t) über dem Stellweg oder der Zeit t vorgegeben bzw. ermittelt und mit diesem dann eine entsprechende Posenänderung, beispielhaft Δ(t) = δ·F'(t)/c, bestimmt bzw. das Deformationsmodell solcherart (um)parametriert wird.

Nach einer Ausführung der vorliegenden Erfindung weist ein Verfahren zum Positionieren eines Stanzniet-Setzwerkzeugs mittels eines Roboters die Schritte auf:
- Kommandieren des Roboters zum Positionieren des Stanzniet-Setzwerkzeugs in eine Nietpose, in einer Ausführung an einem Testelement, in einer Weiterbildung einem Testcoupon;
- Kommandieren einer Stanznietbewegung des Stanzniet-Setzwerkzeugs, insbesondere an dem Testelements, ohne oder besonders bevorzugt mit Setzen eines Niets; und
- manuelles oder sensorisches, in einer Ausführung automatisiertes, Erfassen einer Posenänderung des Testelement infolge, insbesondere während, der Stanznietbewegung oder einer Posenänderung einer Matrize des Stanzniet-Setzwerkzeugs infolge, insbesondere während, der Stanznietbewegung.

Das sensorische Erfassen erfolgt in einer Ausführung mithilfe eines oder mehrerer optoelektronischer Sensoren und/oder Positionssensoren, insbesondere also optoelektronischer Positionssensoren. Hierdurch kann in einer Ausführung die Präzision verbessert werden,
Nach einer Ausführung der vorliegenden Erfindung wird auf Basis der erfassten Posenänderung ein Deformationsmodell kalibriert und in einer Weiterbildung nach diesem Kalibrieren ein hier beschriebenes Verfahren zum robotergestützten Stanznieten mit diesem (solcherart) kalibrierten Deformationsmodell und diesem oder einem typgleichen Stanzniet-Setzwerkzeug und diesem oder einem anderen Roboter durchgeführt.

Durch ein sensorisches, insbesondere automatisiertes, Erfassen einer Posenänderung des Testelement bzw. der Matrize kann in einer Ausführung die Präzision verbessert werden, durch ein manuelles Erfassen in einer Ausführung der apparative Aufbau vereinfacht werden.

In einer Ausführung erfolgen das Erfassen zum Kalibrieren des Deformationsmodells und das robotergestützte Stanznieten auf Basis des kalibrierten Deformationsmodells an unterschiedlichen Standorten. Dadurch kann in einer Ausführung die Präzision der Kalibrierung verbessert, vorzugsweise ein stationärer Messaufbau zum sensorischen, insbesondere automatisierten, Erfassen verwendet, und/oder das robotergestützte Stanznieten verbessert, insbesondere ohne Messplatz für das Kalibrieren durchgeführt werden.

Zusätzlich oder alternativ zu einem Kalibrieren eines Deformationsmodells können nach einer Ausführung der vorliegenden Erfindung auf Basis der erfassten Posenänderung das Stanzniet-Setzwerkzeug geprüft und dadurch in einer Weiterbildung Langzeiteffekte wie Verschleiß oder dergleichen detektiert, insbesondere überwacht, werden. Hierzu wird in einer Ausführung das Kommandieren zum Positionieren des Stanzniet-Setzwerkzeugs in eine Nietpose, Kommandieren einer Stanznietbewegung des Stanzniet-Setzwerkzeugs und Erfassen einer Posenänderung des (jeweiligen) Testelements bzw. der Matrize infolge der (jeweiligen) Stanznietbewegung mehrfach, vorzugsweise zyklisch, wiederholt. Dies lässt sich wiederum am oben erläuterten vereinfachten Beispiel veranschaulichen: vergrößert sich beispielsweise die erfasste Posenänderung über mehrere Zyklen, kann daraus eine Veränderung des Setzwerkzeugs detektiert werden.

In einer Ausführung werden Messwerte der sensorisch erfassten Posenänderung zum Steuern des Roboters und/oder Kalibrieren des Deformationsmodells an eine Steuerung des Roboters übertragen. Dadurch kann in einer Ausführung das Steuern bzw. Kalibrieren verbessert werden.

Nach einer Ausführung der vorliegenden Erfindung ist ein System zum Positionieren eines Stanzniet-Setzwerkzeugs mittels eines Roboters, insbesondere zum robotergestützten Stanznieten, in einer Ausführung hard- und/oder software-, insbesondere programmtechnisch, zur Durchführung eines hier beschriebenen Verfahrens eingerichtet.

Nach einer Ausführung der vorliegenden Erfindung weist ein System zum robotergestützten Stanznieten, auf:
- Mittel zum Kommandieren eines Roboters zum Positionieren eines Stanzniet-Setzwerkzeugs in eine Nietpose an wenigstens zwei miteinander zu fügenden Werkstücken;
- Mittel zum Kommandieren des Stanzniet-Setzwerkzeugs zum Setzen eines Niet zum Fügen der wenigstens zwei Werkstücke mittels Stanznieten; und
- Mittel zum Kommandieren des Roboters zum Verändern der Pose des Stanzniet-Setzwerkzeugs zur wenigstens teilweisen Kompensierung einer stanznietbedingten elastischen Deformation des Stanzniet-Setzwerkzeugs während dieses Stanznietens.

Nach einer Ausführung der vorliegenden Erfindung weist ein System zum Positionieren eines Stanzniet-Setzwerkzeugs mittels eines Roboters auf:
- Mittel zum Kommandieren des Roboters zum Positionieren des Stanzniet-Setzwerkzeugs in eine Nietpose, insbesondere an einem Testelement;
- Mittel zum Kommandieren einer Stanznietbewegung des Stanzniet-Setzwerkzeugs, insbesondere an dem Testelement, mit oder ohne Setzen eines Niets; und
- Mittel zum manuellen oder sensorischen, insbesondere automatisierten, Erfassen einer Posenänderung des Testelements oder einer Matrize des Stanzniet-Setzwerkzeugs infolge der Stanznietbewegung.

Nach einer Ausführung der vorliegenden Erfindung weist dieses System auf:
- Mittel zum Prüfen des Stanzniet-Setzwerkzeugs auf Basis der erfassten Posenänderung.

Zusätzlich oder alternativ weist dieses System nach einer Ausführung der vorliegenden Erfindung auf:
- Mittel zum Kalibrieren eines Deformationsmodells, insbesondere des Deformationsmodells, das in einem hier beschriebenen System zum robotergestützten Stanznieten verwendet wird.

In einer Ausführung weist eines der oben genannten Systeme bzw. sein(e(r)) Mittel auf:
- Mittel zum Kommandieren des Roboters während des Stanznietens auf Basis eines abgespeicherten Deformationsmodells des Stanzniet-Setzwerkzeugs, in einer Weiterbildung Mittel zum Kalibrieren des Deformationsmodells auf Basis des Stanzniet-Setzwerkzeugtyps oder des individuellen Stanzniet-Setzwerkzeugs und/oder zum Parametrieren auf Basis des durchzuführenden Stanznietens und/oder der zu fügenden Werkstücke; und/oder
- Mittel zum Kommandieren des Roboters zum weiteren Verändern der Pose des Stanzniet-Setzwerkzeugs zur wenigstens teilweisen Kompensierung einer elastischen Rückformung des Stanzniet-Setzwerkzeugs infolge eines Abbaus einer durch das Stanzniet-Setzwerkzeug aufgebrachten Kraft nach dem Stanznieten, insbesondere auf Basis des abgespeicherten Deformationsmodells; und/oder
- Mittel zum Kommandieren des Roboters zum Positionieren des Stanzniet-Setzwerkzeugs in eine weitere Nietpose und Kommandieren des Stanzniet-Setzwerkzeugs zum Setzen eines weiteren Niet zum Fügen der wenigstens zwei Werkstücke oder von wenigstens zwei weiteren Werkstücke mittels weiterem Stanznieten, wobei auch während dieses weiteren Stanznietens der Roboter auf Basis des abgespeicherten Deformationsmodells des Stanzniet-Setzwerkzeugs zum Verändern der Pose des Stanzniet-Setzwerkzeugs zur wenigstens teilweisen Kompensierung einer stanznietbedingten elastischen Deformation des Stanzniet-Setzwerkzeugs kommandiert wird, wobei das Deformationsmodell auf Basis dieses weiteren durchzuführenden Stanznietens und/oder der dabei zu fügenden Werkstücke umparametriert ist; und/oder
- Mittel zum Übertragen von Messwerten der sensorisch erfassten Posenänderung zum Steuern des Roboters und/oder Kalibrieren des Deformationsmodells an eine Steuerung des Roboters.

Ein System und/oder ein Mittel im Sinne der vorliegenden Erfindung kann hard- und/oder softwaretechnisch ausgebildet sein, insbesondere wenigstens eine, vorzugsweise mit einem Speicher- und/oder Bussystem daten- bzw. signalverbundene, insbesondere digitale, Verarbeitungs-, insbesondere Mikroprozessoreinheit (CPU), Graphikkarte (GPU) oder dergleichen, und/oder ein oder mehrere Programme oder Programmmodule aufweisen. Die Verarbeitungseinheit kann dazu ausgebildet sein, Befehle, die als ein in einem Speichersystem abgelegtes Programm implementiert sind, abzuarbeiten, Eingangssignale von einem Datenbus zu erfassen und/oder Ausgangssignale an einen Datenbus abzugeben. Ein Speichersystem kann ein oder mehrere, insbesondere verschiedene, Speichermedien, insbesondere optische, magnetische, Festkörper- und/oder andere nicht-flüchtige Medien aufweisen. Das Programm kann derart beschaffen sein, dass es die hier beschriebenen Verfahren verkörpert bzw. auszuführen imstande ist, sodass die Verarbeitungseinheit die Schritte solcher Verfahren ausführen kann und damit insbesondere den Roboter und/oder das Stanzniet-Setzwerkzeug steuern kann. Ein Computerprogrammprodukt kann in einer Ausführung ein, insbesondere computerlesbares und/oder nicht-flüchtiges, Speichermedium zum Speichern eines Programms bzw. von Anweisungen bzw. mit einem darauf gespeicherten Programm bzw. mit darauf gespeicherten Anweisungen aufweisen, insbesondere sein. In einer Ausführung veranlasst ein Ausführen dieses Programms bzw. dieser Anweisungen durch ein System bzw. eine Steuerung, insbesondere einen Computer oder eine Anordnung von mehreren Computern, das System bzw. die Steuerung, insbesondere den bzw. die Computer, dazu, ein hier beschriebenes Verfahren bzw. einen oder mehrere seiner Schritte auszuführen, bzw. sind das Programm bzw. die Anweisungen hierzu eingerichtet.

In einer Ausführung werden ein oder mehrere, insbesondere alle, Schritte des Verfahrens vollständig oder teilweise automatisiert durchgeführt, insbesondere durch das System bzw. sein(e) Mittel.

In einer Ausführung weist das System den Roboter und/oder das Stanzniet-Setzwerkzeug und/oder eine bzw. die Robotersteuerung auf.

Weitere Vorteile und Merkmale ergeben sich aus den Unteransprüchen und den Ausführungsbeispielen. Hierzu zeigt, teilweise schematisiert:
- Fig. 1:: ein System beim Positionieren eines Stanzniet-Setzwerkzeugs mittels eines Roboters nach einem Verfahren einer Ausführung der vorliegenden Erfindung;
- Fig. 2:: das System bei einem weiteren Schritt des Verfahrens;
- Fig. 3:: das System bei einem robotergestützten Stanznieten nach einem Verfahren nach einer Ausführung der vorliegenden Erfindung;
- Fig. 4:: das System bei einem weiteren Schritt dieses Stanznietens;
- Fig. 5:: ein Verfahren nach einer Ausführung der vorliegenden Erfindung; und
- Fig. 6:: ein Verfahren nach einer weiteren Ausführung der vorliegenden Erfindung.

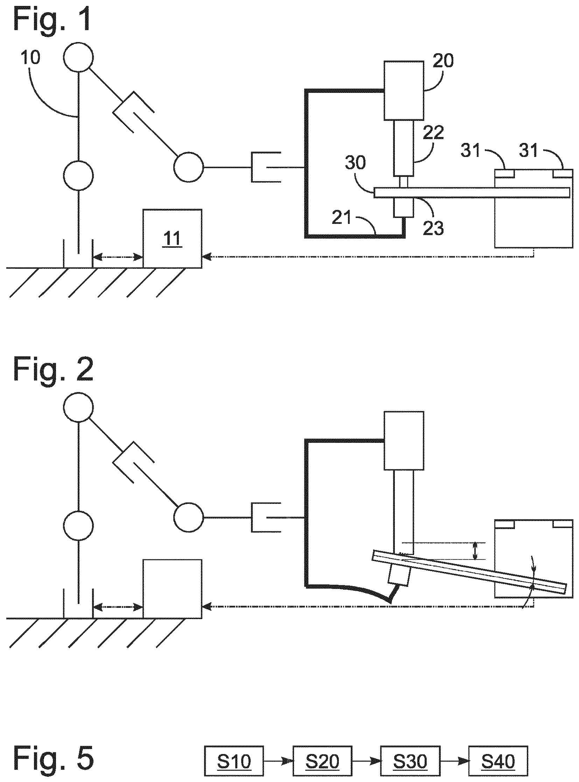

Fig. 1 zeigt ein System bzw. einen Verfahrensschritt nach einer Ausführung der vorliegenden Erfindung.

Das System weist einen Roboter 10 auf, der ein Stanzniet-Setzwerkzeug 20 mit einem Schenkel mit einer Matrize 23 ("matrizenseitiger Schenkel") 21 und einem Schenkel mit einem beweglichen Nietstempel 22 zum Setzen von Stanznieten führt.

Eine Robotersteuerung 11 kommandiert den Roboter so, dass er das Stanzniet-Setzwerkzeug 20 in eine in Fig. 1 gezeigte Nietpose an einem Testcoupon 30 positioniert (Fig. 5: Schritt S10).

Anschließend (Fig. 1 → Fig. 2) kommandiert die Robotersteuerung 11 eine Stanznietbewegung des Stanzniet-Setzwerkzeugs 20 an dem Testcoupon 30 (Fig. 5: Schritt S20).

Infolge dieser Stanznietbewegung verformt sich das Stanzniet-Setzwerkzeug 20, insbesondere sein matrizenseitiger Schenkel 21, und die Pose des Testcoupons 30 ändert sich entsprechend (vgl. Fig. 2).

Diese Posenänderung des Testcoupons 30 wird mittels einer stationären Messvorrichtung mit Sensoren 31 erfasst und an die Robotersteuerung 11 übertragen (Fig. 5: Schritt S30).

Alternativ kann die Posenänderung auch manuell erfasst und in die Robotersteuerung 11 eingegeben werden.

Auf Basis dieser erfassten Posenänderung wird in einer Ausführung das Stanzniet-Setzwerkzeug 20 geprüft (Fig. 5: Schritt S40). Beispielsweise kann der oben beschriebene Vorgang zyklisch wiederholt werden: vergrößert sich dabei die Posenänderung, kann (daraus) eine Veränderung des Stanzniet-Setzwerkzeugs 20 detektiert werden.

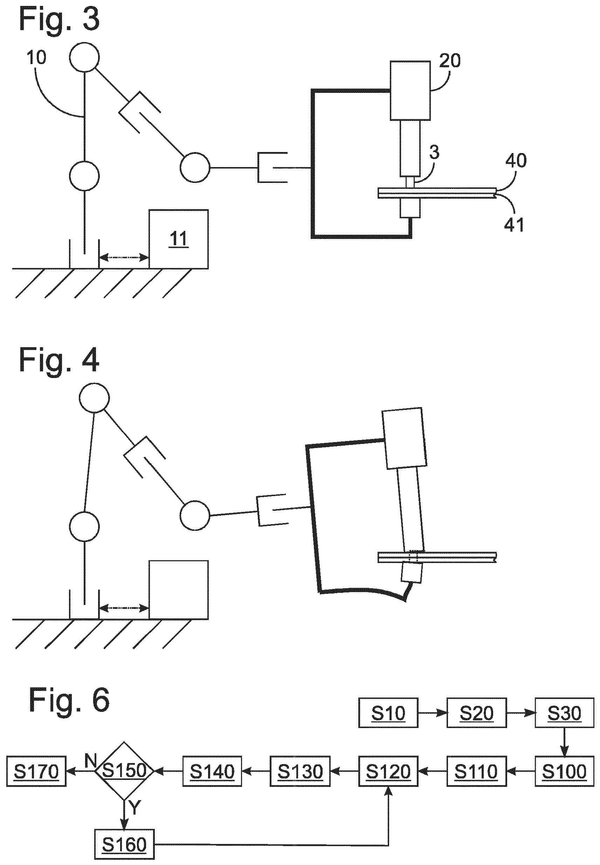

Fig. 6 zeigt ein Verfahren nach einer weiteren Ausführung der vorliegenden Erfindung. Die Schritte S10-S30 entsprechen den vorstehend mit Bezug auf Fig. 5 beschriebenen.

Bei diesem Verfahren wird auf Basis der in Schritt S30 erfassten Posenänderung ein Deformationsmodell kalibriert (Fig. 6: Schritt S100), beispielsweise eine Zuordnung zwischen Prozess-, insbesondere Schließkräften und entsprechenden Verschiebungen und/oder Verdrehungen des Testcoupons 30 bzw. diesen wenigstens teilweise kompensierenden Verschiebungen und/oder Verdrehungen des Stanzniet-Setzwerkzeugs 20, ermittelt bzw. bestimmt.

Danach wird bei einer Inbetriebnahme des Stanzniet-Setzwerkzeugs 20 an einem von der stationären Messvorrichtung verschiedenen Standort, zum Beispiel in einer Fertigungsstraße oder dergleichen, das abgespeicherte, auf Basis des Stanzniet-Setzwerkzeugs 20 kalibrierte Deformationsmodell auf Basis eines durchzuführenden Stanznietens und/oder dabei zu fügender Werkstücke parametriert (Fig. 6: Schritt S110). Wurden beispielsweise in Schritt S100 für verschiedene Schließkräfte oder dergleichen entsprechende Verschiebungen bzw. Verdrehungen zur Kompensation ermittelt und das Deformationsmodell solcherart kalibriert, kann nun mit einem vorgegebenen Schließkraftverlauf auch ein Verlauf der Verschiebungen bzw. Verdrehungen zur Kompensation während dieses Stanznietens ermittelt und das kalibriert Deformationsmodell solcherart parametriert werden.

Nun kommandiert die Robotersteuerung 11 den Roboter so, dass er das Stanzniet-Setzwerkzeug 20 in eine in Fig. 3 gezeigte Nietpose an wenigstens zwei miteinander zu fügenden Werkstücken 40, 41 positioniert (Fig. 6: Schritt S120).

Dann (Fig. 3 → Fig. 4) kommandiert die Robotersteuerung 11 das Stanzniet-Setzwerkzeug zum Setzen eines Niet 3 zum Fügen der wenigstens zwei Werkstücke 40, 41 mittels Stanznieten (Fig. 6: Schritt S130).

Während dieses Stanznietens kommandiert die Robotersteuerung 11 auf Basis des abgespeicherten, kalibrierten und parametrierten Deformationsmodells den Roboter 10 so, dass er die Pose des Stanzniet-Setzwerkzeugs 20 während des Stanznietens derart bzw. mit der Maßgabe ändert, dass eine stanznietbedingte elastische Deformation des Stanzniet-Setzwerkzeugs 20 wenigstens teilweise kompensiert wird.

Dies lässt sich am Vergleich der Fig. 2, 4 vereinfacht veranschaulichen: in Fig. 2 ist eine Verschiebung und Verdrehung des Testcoupons 30 infolge der stanznietbedingten Verformung des Stanzniet-Setzwerkzeugs 20, insbesondere seines matrizenseitigen Schenkels 21, angedeutet, in Fig. 4 eine entsprechende Posenänderung des Stanzniet-Setzwerkzeugs 20 durch den Roboter 10. Rein beispielshaft wird hierzu in einer Ausführung während eines bzw. mit zunehmendem Aufbau(s) einer Niet- bzw. Schließkraft des Stanzniet-Setzwerkzeugs 20 das Stanzniet-Setzwerkzeug 20 entgegen einer Biegerichtung des Schenkels 21 bzw. in Fig. 4 gegen den Uhrzeigersinn verdreht und dabei in Achsrichtung des Nietstempels und/oder quer hierzu entsprechend verschoben, um so insbesondere eine Verbiegung des Schenkels 21 wenigstens teilweise zu kompensieren. Zur Vereinfachung ist nur eine Verbiegung des matrizenseitigen Schenkels 21 dargestellt bzw. berücksichtigt, wobei alternativ oder zusätzlich auch eine Verbiegung des restlichen Stanzniet-Setzwerkzeugs 20 bzw. Aufbiegung in Achsrichtung des Nietstempels berücksichtigt werden kann.

Nach dem Stanznieten kommandiert die Robotersteuerung 11 auf Basis des abgespeicherten, kalibrierten und parametrierten Deformationsmodells den Roboter 10 so, dass er die Pose des Stanzniet-Setzwerkzeugs 20 während des (Wieder)Abbaus einer durch das Stanzniet-Setzwerkzeug aufgebrachten Kraft derart bzw. mit der Maßgabe ändert, dass eine durch diesen Kraftabbau bedingte elastische Rückformung des Stanzniet-Setzwerkzeugs 20 wenigstens teilweise kompensiert wird (Fig. 6: Schritt S140).

Sollen später andere Werkstücke mittels weiterem Stanznieten gefügt werden (S150: "Y"), werden die oben genannten Schritte S120 - S140 entsprechend widerholt wobei zuvor das abgespeicherte Deformationsmodell auf Basis dieses weiteren durchzuführenden Stanznietens und/oder der dabei zu fügenden Werkstücke umparametriert wird (Fig. 6: Schritt S160).

Falls weitere Stanznieten an den Werkstücken 40, 41 gesetzt werden sollen, kann auch hierzu das Deformationsmodell umparametriert werden, falls die Prozessparameter dieses weiteren Stanznietens dies erfordern. Gleichermaßen kann gegebenenfalls auch das in Schritt S110 parametrierte Deformationsmodell weiterverwendet werden. Beides ist ebenso wie ein Beenden des Verfahrens in Fig. 6 gemeinsam vereinfacht durch einen Schritt S170 angedeutet.

Obwohl in der vorhergehenden Beschreibung exemplarische Ausführungen erläutert wurden, sei darauf hingewiesen, dass eine Vielzahl von Abwandlungen möglich ist.

So kann insbesondere anstelle des sensorischen, automatisierten Vermessens der Posenänderung des Testcoupons auch manuell die Posenänderung der Matrize des Stanzniet-Setzwerkzeugs erfasst bzw. verwendet werden.

Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen ergibt.

### Bezugszeichenliste

- 10: Roboter
- 11: Robotersteuerung
- 20: Stanzniet-Setzwerkzeug
- 21: matrizenseitiger Schenkel
- 22: Nietstempel
- 23: Matrize
- 3: Niet
- 30: Testcoupon (Testelement)
- 31: Sensor
- 40, 41: Werkstück

## Patentansprüche

1. Verfahren zum Positionieren eines Stanzniet-Setzwerkzeugs (20) mittels eines Roboters (10), mit den Schritten:
- Kommandieren (S10) des Roboters zum Positionieren des Stanzniet-Setzwerkzeugs in eine Nietpose, insbesondere an einem Testelement (30);
- Kommandieren (S20) einer Stanznietbewegung des Stanzniet-Setzwerkzeugs, insbesondere an dem Testelement, mit oder ohne Setzen eines Niets;
**gekennzeichnet durch**:
- manuelles oder sensorisches, insbesondere automatisiertes, Erfassen (S30) einer Posenänderung einer Matrize (23) des Stanzniet-Setzwerkzeugs oder des Testelements infolge der Stanznietbewegung;
wobei auf Basis der erfassten Posenänderung
a) das Stanzniet-Setzwerkzeug geprüft wird (S40); und/oder
b) ein Deformationsmodell kalibriert wird (S100).

2. Verfahren nach Anspruch 1, **dadurch gekennzeichnet, dass** Messwerte der sensorisch erfassten Posenänderung zum Steuern des Roboters und/oder Kalibrieren des Deformationsmodells an eine Steuerung des Roboters übertragen werden und/oder das Erfassen zum Kalibrieren des Deformationsmodells und das robotergestützte Stanznieten auf Basis des kalibrierten Deformationsmodells an unterschiedlichen Standorten erfolgen.

3. Verfahren nach einem der vorhergehenden Ansprüche, wobei nach dem Kalibrieren des Deformationsmodells ein robotergestütztes Stanznieten mit diesem kalibrierten Deformationsmodell und diesem oder einem typgleichen Stanzniet-Setzwerkzeug und diesem oder einem anderen Roboter durchgeführt wird, welches die Schritte aufweist:
- Kommandieren (S120) des zum Stanznieten verwendeten Roboters (10) zum Positionieren des zum Stanznieten verwendeten Stanzniet-Setzwerkzeugs (20) in eine Nietpose an wenigstens zwei miteinander zu fügenden Werkstücken (40, 41); und
- Kommandieren (S130) des zum Stanznieten verwendeten Stanzniet-Setzwerkzeugs zum Setzen eines Niet (3) zum Fügen der wenigstens zwei Werkstücke mittels Stanznieten;
wobei während dieses Stanznietens der zum Stanznieten verwendete Roboter zum Verändern der Pose des zum Stanznieten verwendeten Stanzniet-Setzwerkzeugs zur wenigstens teilweisen Kompensierung einer stanznietbedingten elastischen Deformation des zum Stanznieten verwendeten Stanzniet-Setzwerkzeugs kommandiert wird, wobei der zum Stanznieten verwendete Roboter während des Stanznietens auf Basis des abgespeicherten Deformationsmodells kommandiert wird.

4. Verfahren nach Anspruch 3, **dadurch gekennzeichnet, dass** das Deformationsmodell auf Basis des durchzuführenden Stanznietens und/oder der zu fügenden Werkstücke parametriert ist.

5. Verfahren nach einem der vorhergehenden Ansprüche 3-4, **dadurch gekennzeichnet, dass** nach dem Stanznieten der zum Stanznieten verwendete Roboter zum weiteren Verändern der Pose des zum Stanznieten verwendeten Stanzniet-Setzwerkzeugs zur wenigstens teilweisen Kompensierung einer elastischen Rückformung des zum Stanznieten verwendeten Stanzniet-Setzwerkzeugs infolge eines Abbaus einer durch das zum Stanznieten verwendete Stanzniet-Setzwerkzeug aufgebrachten Kraft kommandiert wird (S140), insbesondere auf Basis des abgespeicherten Deformationsmodells.

6. Verfahren nach einem der vorhergehenden Ansprüche 3-5, **dadurch gekennzeichnet, dass** das Verändern der Pose des zum Stanznieten verwendeten Stanzniet-Setzwerkzeugs während des Stanznietens und/oder nach Fügen der wenigstens zwei Werkstücke wenigstens eine Verschiebung, insbesondere in oder entgegen einer Schließrichtung des zum Stanznieten verwendeten Stanzniet-Setzwerkzeugs und/oder quer hierzu und/oder in und/oder entgegen einer Achsrichtung eines TCPs des zum Stanznieten verwendeten Roboters, und/oder wenigstens eine Verdrehung, insbesondere um eine Achse quer zur Schließrichtung des zum Stanznieten verwendeten Stanzniet-Setzwerkzeugs und/oder quer zu einer Längsrichtung eines Schenkels des zum Stanznieten verwendeten Stanzniet-Setzwerkzeugs und/oder um eine Achse eines TCPs des zum Stanznieten verwendeten Roboters, umfasst.

7. Verfahren nach einem der vorhergehenden Ansprüche 3-6, mit den Schritten:
- Kommandieren des zum Stanznieten verwendeten Roboters zum Positionieren des zum Stanznieten verwendeten Stanzniet-Setzwerkzeugs in eine weitere Nietpose;
- Kommandieren des zum Stanznieten verwendeten Stanzniet-Setzwerkzeugs zum Setzen eines weiteren Niet zum Fügen der wenigstens zwei Werkstücke oder von wenigstens zwei weiteren Werkstücke mittels weiterem Stanznieten;
wobei auch während dieses weiteren Stanznietens der zum Stanznieten verwendeten Roboter auf Basis des abgespeicherten Deformationsmodells zum Verändern der Pose des zum Stanznieten verwendeten Stanzniet-Setzwerkzeugs zur wenigstens teilweisen Kompensierung einer stanznietbedingten elastischen Deformation des zum Stanznieten verwendeten Stanzniet-Setzwerkzeugs kommandiert wird, wobei das Deformationsmodell auf Basis dieses weiteren durchzuführenden Stanznietens und/oder der dabei zu fügenden Werkstücke umparametriert ist.

8. System zum Positionieren eines Stanzniet-Setzwerkzeugs (20) mittels eines Roboters (10), das zur Durchführung eines Verfahrens nach einem der vorhergehenden Ansprüche eingerichtet ist. und/oder aufweist:
- Mittel zum Kommandieren des Roboters zum Positionieren des Stanzniet-Setzwerkzeugs in eine Nietpose, insbesondere an einem Testelement (30);
- Mittel zum Kommandieren einer Stanznietbewegung des Stanzniet-Setzwerkzeugs, insbesondere an dem Testelement, mit oder ohne Setzen eines Niets; und
- Mittel zum manuellen oder sensorischen, insbesondere automatisierten, Erfassen einer Posenänderung einer Matrize (23) des Stanzniet-Setzwerkzeugs oder des Testelements infolge der Stanznietbewegung;
sowie:
a) Mittel zum Prüfen des Stanzniet-Setzwerkzeugs auf Basis der erfassten Posenänderung; und/oder
b) Mittel zum Kalibrieren eines Deformationsmodells.

9. Computerprogramm oder Computerprogrammprodukt, wobei das Computerprogramm oder Computerprogrammprodukt, insbesondere auf einem computerlesbaren und/oder nicht-flüchtigen Speichermedium gespeicherte, Anweisungen enthält, die bei der Ausführung durch einen oder mehrere Computer oder ein System nach Anspruch 8 den oder die Computer oder das System dazu veranlassen, ein Verfahren nach einem der Ansprüche 1 bis 7 durchzuführen.

## Claims

1. A method of positioning a self piercing rivet setting tool (20) by means of a robot (10), the method comprising the steps of:
- commanding (S10) the robot to position the self piercing rivet setting tool in a riveting pose, in particular on a test element (30);
- commanding (S20) a self piercing riveting movement of the self piercing rivet setting tool, in particular on the test element, with or without setting a rivet;
**characterised by**:
- manually or with the aid of a sensor, in particular automatically, detecting (S30) a change in pose of a die (23) of the self piercing rivet setting tool or of the test element, as a consequence of the self piercing riveting movement;
wherein, on the basis of the detected change in pose,
a) the self piercing rivet setting tool is checked (S40); and / or
b) a deformation model is calibrated (S100).

2. The method according to claim 1, **characterised in that** measured values of the change in pose detected with the aid of a sensor are transmitted to a control facility of the robot for controlling the robot and / or for calibrating the deformation model, and / or the detecting for the purpose of calibrating the deformation model and the robot-assisted self piercing riveting on the basis of the calibrated deformation model take place at different locations.

3. The method according to any one of the preceding claims, wherein, after the calibrating of the deformation model, a robot-assisted self piercing riveting is carried out with this calibrated deformation model and this self piercing rivet setting tool or a self piercing rivet setting tool of the same type, and with this robot or a different robot, the method comprising the steps of:
- commanding (S120) the robot (10) used for the self piercing riveting to position the self piercing rivet setting tool (20) used for the self piercing riveting in a riveting pose on at least two workpieces (40, 41) which are to be joined together; and
- commanding (S130) the self piercing riveting tool used for the self piercing riveting to set a rivet (3) for joining the at least two workpieces by means of self piercing riveting;
wherein, during this self piercing riveting, the robot used for the self piercing riveting is commanded to change the pose of the self piercing rivet setting tool used for the self piercing riveting in order to at least partially compensate for an elastic deformation of the self piercing rivet setting tool used for the self piercing riveting, which elastic deformation is caused by the self piercing riveting, wherein the robot used for the self piercing riveting is commanded during the self piercing riveting on the basis of the stored deformation model.

4. The method according to claim 3, **characterised in that** the deformation model is parameterised on the basis of the self piercing riveting to be carried out and / or on the basis of the workpieces to be joined.

5. The method according to any one of the preceding claims 3 to 4, **characterised in that**, after the self piercing riveting, the robot used for the self piercing riveting is commanded (S140) to further change the pose of the self piercing rivet setting tool used for the self piercing riveting, in order to at least partially compensate for an elastic reverse deformation of the self piercing rivet setting tool used for the self piercing riveting as a result of a reduction in a force applied by the self piercing rivet setting tool used for the self piercing riveting, in particular on the basis of the stored deformation model.

6. The method according to any one of the preceding claims 3 to 5, **characterised in that** the change in the pose of the self piercing rivet setting tool used for the self piercing riveting comprises, during the self piercing riveting and / or after joining the at least two workpieces, at least one displacement, in particular in or against a closing direction of the self piercing rivet setting tool used for the self piercing riveting and / or transversely thereto and / or in and / or against an axial direction of a TCP of the robot used for the self piercing riveting, and / or at least one rotation, in particular about an axis transverse to the closing direction of the self piercing rivet setting tool used for the self piercing riveting and / or transverse to a longitudinal direction of a leg of the self piercing rivet setting tool used for the self piercing riveting and / or about an axis of a TCP of the robot used for the self piercing riveting.

7. The method according to any one of the preceding claims 3 to 6, comprising the steps of:
- commanding the robot used for the self piercing riveting to position the self piercing rivet setting tool used for the self piercing riveting in a further riveting pose;
- commanding the self piercing rivet setting tool used for the self piercing riveting to set a further rivet for joining the at least two workpieces or at least two further workpieces by means of further self piercing riveting;
wherein, also during this further self piercing riveting, the robot used for the self piercing riveting is commanded on the basis of the stored deformation model to change the pose of the self piercing rivet setting tool used for the self piercing riveting in order to at least partially compensate for an elastic deformation of the self piercing rivet setting tool used for the self piercing riveting, which elastic deformation is caused by the self piercing riveting, wherein the deformation model is re-parameterised on the basis of this further self piercing riveting to be carried out and / or on the basis of the workpieces to be joined in this process.

8. A system for positioning a self piercing rivet setting tool (20) by means of a robot (10), which is arranged to carry out a method according to any one of the preceding claims and / or which comprises:
- means for commanding the robot to position the self piercing rivet setting tool in a riveting pose, in particular on a test element (30);
- means for commanding a self piercing riveting movement of the self piercing rivet setting tool, in particular on the test element, with or without setting a rivet; and
- means for manually, or with the aid of a sensor, in particular automatically, detecting a change in pose of a die (23) of the self piercing rivet setting tool or of the test element as a result of the self piercing riveting movement;
as well as:
a) means for testing the self piercing rivet setting tool on the basis of the detected change in pose; and / or
b) means for calibrating a deformation model.

9. A computer program or a computer program product, wherein the computer program or the computer program product contains instructions, in particular instructions which are stored on a computer-readable and / or non-volatile storage medium, which instructions, when executed by one or more computers or a system according to claim 8, cause the computer or computers or the system to carry out a method according to any one of claims 1 to 7.

## Revendications

1. Procédé de positionnement d'un outil de mise en place de rivet auto-perceur (20) au moyen d'un robot (10), avec les étapes :
- de commande (S10) du robot pour positionner l'outil de mise en place de rivet auto-perceur dans une pose de rivet, en particulier sur un élément de test (30) ;
- de commande (S20) d'un mouvement de rivetage auto-perceur de l'outil de mise en place de rivet auto-perceur, en particulier sur l'élément de test, avec ou sans mise en place d'un rivet ;
**caractérisé par** :
- la détection (S30) manuelle ou par capteur, en particulier automatisée, d'un changement de pose d'une matrice (23) de l'outil de mise en place de rivet auto-perceur ou de l'élément de test suite au mouvement de rivetage auto-perceur ;
dans lequel sur la base du changement de pose détecté
a) l'outil de mise en place de rivet auto-perceur est vérifié (S40) ; et/ou
b) un modèle de déformation est étalonné (S100).

2. Procédé selon la revendication 1, **caractérisé en ce que** des valeurs de mesure du changement de pose détecté par capteur sont transmises à une commande du robot pour commander le robot et/ou étalonner le modèle de déformation, et/ou la détection pour l'étalonnage du modèle de déformation et le rivetage auto-perceur assisté par robot s'effectuent sur la base du modèle de déformation étalonné à différents emplacements.

3. Procédé selon l'une quelconque des revendications précédentes, dans lequel après l'étalonnage du modèle de déformation un rivetage auto-perceur assisté par robot est réalisé avec ce modèle de déformation étalonné et cet outil de mise en place de rivet auto-perceur ou un type identique et ce ou un autre robot, qui présente les étapes :
- de commande (S120) du robot (10) utilisé pour le rivetage auto-perceur pour positionner l'outil de mise en place de rivet auto-perceur (20) utilisé pour le rivetage auto-perceur dans une pose de rivet sur au moins deux pièces (40, 41) à assembler ; et
- de commande (S130) de l'outil de mise en place de rivet auto-perceur utilisé pour le rivetage auto-perceur pour la mise en place d'un rivet (3) pour l'assemblage des au moins deux pièces au moyen de rivets auto-perceurs ;
dans lequel pendant ce rivetage auto-perceur le robot utilisé pour le rivetage auto-perceur est commandé pour modifier la pose de l'outil de mise en place de rivet auto-perceur utilisé pour le rivetage auto-perceur pour compenser au moins partiellement une déformation élastique liée au rivetage auto-perceur de l'outil de mise en place de rivet auto-perceur utilisé pour le rivetage auto-perceur, dans lequel le robot utilisé pour le rivetage auto-perceur est commandé pendant le rivetage auto-perceur sur la base du modèle de déformation enregistré.

4. Procédé selon la revendication 3, **caractérisé en ce que** le modèle de déformation est paramétré sur la base du rivetage auto-perceur à réaliser et/ou des pièces à assembler.

5. Procédé selon l'une quelconque des revendications 3-4 précédentes, **caractérisé en ce que**, après le rivetage auto-perceur, le robot utilisé pour le rivetage auto-perceur est commandé (S140), en particulier sur la base du modèle de déformation enregistré, pour une modification supplémentaire de la pose de l'outil de mise en place de rivet auto-perceur utilisé pour le rivetage auto-perceur afin de compenser au moins partiellement un redressement élastique de l'outil de mise en place de rivet auto-perceur utilisé pour le rivetage auto-perceur, résultant d'une diminution d'une force appliquée par l'outil de mise en place de rivet auto-perceur utilisé pour le rivetage auto-perceur.

6. Procédé selon l'une quelconque des revendications 3-5 précédentes, **caractérisé en ce que** la modification de la pose de l'outil de mise en place de rivet auto-perceur utilisé pour le rivetage auto-perceur pendant le rivetage auto-perceur et/ou après l'assemblage des au moins deux pièces entraîne au moins un déplacement, en particulier dans ou à l'encontre d'une direction de fermeture de l'outil de mise en place de rivet auto-perceur utilisé pour le rivetage auto-perceur et/ou perpendiculairement à celle-ci et/ou dans et/ou à l'encontre d'une direction axiale d'un TCP du robot utilisé pour le rivetage auto-perceur, et/ou au moins une rotation, en particulier autour d'un axe perpendiculairement à la direction de fermeture de l'outil de mise en place de rivet auto-perceur utilisé pour le rivetage auto-perceur et/ou perpendiculairement à une direction longitudinale d'une branche de l'outil de mise en place de rivet auto-perceur utilisé pour le rivetage auto-perceur et/ou autour d'un axe d'un TCP du robot utilisé pour le rivetage auto-perceur.

7. Procédé selon l'une quelconque des revendications 3-6 précédentes, avec les étapes :
- de commande du robot utilisé pour le rivetage auto-perceur pour positionner l'outil de mise en place de rivet auto-perceur utilisé pour le rivetage auto-perceur dans une pose de rivet supplémentaire ;
- de commande de l'outil de mise en place de rivet auto-perceur utilisé pour le rivetage auto-perceur pour la mise en place d'un rivet supplémentaire pour assembler les au moins deux pièces ou au moins deux pièces supplémentaires au moyen d'un rivetage auto-perceur supplémentaire ;
dans lequel, également pendant ce rivetage auto-perceur supplémentaire, le robot utilisé pour le rivetage auto-perceur est commandé sur la base du modèle de déformation enregistré pour modifier la pose de l'outil de mise en place de rivet auto-perceur utilisé pour le rivetage auto-perceur pour compenser au moins partiellement une déformation élastique liée au rivetage auto-perceur de l'outil de mise en place de rivet auto-perceur, dans lequel le modèle de déformation est reparamétré sur la base de ce rivetage auto-perceur supplémentaire à réaliser et/ou des pièces à assembler.

8. Système de positionnement d'un outil de mise en place de rivet auto-perceur (20) au moyen d'un robot (10), qui est configuré pour mettre en œuvre un procédé selon l'une quelconque des revendications précédentes et/ou présente :
- des moyens pour commander le robot pour positionner l'outil de mise en place de rivet auto-perceur dans une pose de rivet, en particulier sur un élément de test (30) ;
- des moyens pour commander un mouvement de rivetage auto-perceur de l'outil de mise en place de rivet auto-perceur, en particulier sur l'élément de test, avec ou sans mise en place d'un rivet ; et
- des moyens pour la détection manuelle ou par capteur, en particulier automatisée, d'un changement de pose d'une matrice (23) de l'outil de mise en place de rivet auto-perceur ou de l'élément de test suite au mouvement de rivetage auto-perceur ;
ainsi que :
a) des moyens pour vérifier l'outil de mise en place de rivet auto-perceur sur la base du changement de pose détecté ; et/ou
b) des moyens pour étalonner un modèle de déformation.

9. Programme informatique ou produit programme informatique, dans lequel le programme informatique ou le produit programme informatique contient des instructions, en particulier stockées sur un support de stockage lisible par ordinateur et/ou non volatil, qui, lorsqu'elles sont exécutées par un ou plusieurs ordinateurs ou un système selon la revendication 8, amènent le ou les ordinateurs ou le système à mettre en œuvre un procédé selon l'une quelconque des revendications 1 à 7.
